# EUROPÄISCHE PATENTSCHRIFT

(11) **EP 2 466 410 B1**
(45) Veröffentlichungstag und Bekanntmachung des Hinweises auf die Patenterteilung: **21.05.2014**
(21) Anmeldenummer: 11193212.5
(22) Anmeldetag: 13.12.2011
(51) Int. Cl.: G05D 1/02

(54) **Verfahren und Vorrichtung zum automatischen Steuern eines Transportsystems**
Method and device for automatically controlling a transport system
Procédé et dispositif destinés à la commande automatique d'un système de transport

(30) Priorität: 15.12.2010 EP 10195237
(43) Veröffentlichungstag der Anmeldung: 20.06.2012
(73) Patentinhaber: MT Robot AG, 4222 Zwingen (CH)
(72) Erfinder: Drost, Andreas, 4125 Riehen (CH)
(74) Vertreter: Braun, André jr.

(56) Entgegenhaltungen:
- WO-A2-2008/060689
- US-A1- 2007 156 286

## Beschreibung

Die Erfindung betrifft eine Vorrichtung zum automatisierten Steuern eines Transportsystems gemäss dem Oberbegriff des unabhängigen Patentanspruchs 1 sowie ein entsprechendes Verfahren.

### Beschreibung

Aus dem Stand der Technik sind Steuervorrichtungen und entsprechende Verfahren für selbstfahrende Transportsysteme bekannt, welche Oberflächen von beweglichen oder unbeweglichen Objekten, insbesondere des Fahrgrundes oder Personen in Fahrtrichtung des Transportsystems, erfassen und verarbeiten.

So wird in der Patentschrift EP 0290633 B1 ein Verfahren zum Erkennen von Änderungen im Fahrraum eines unbemannten Fahrzeugs offenbart. Hierbei wird mittels eines berührungslosen Aufnehmers sowie einer Verarbeitung der Messwerte für die Steuerung des Fahrzeugs aus mindestens einer von mindestens zwei beabstandeten Öffnungen am Fahrzeug eine Rasterprojektion in Fahrtrichtung auf die Fahrbahn abgestrahlt und von mindestens einer anderen Öffnung von der Rasterprojektion und von dem vor dem Fahrzeug befindlichen Raum Bildfolgen aufgenommen, wobei die Rasteränderungen nach Verarbeitung in Echtzeit eine Steuerung des unbemannten Fahrzeugs veranlassen.

Einer der Nachteile dieses Verfahrens sowie der entsprechenden Vorrichtung besteht darin, dass ein optisch wahrnehmbares räumliches Raster in den Raum vor dem Fahrzeug ausgesendet und mittels einer Videokamera erfasst werden muss. Die Auswertung der erfassten Bilddaten in Echtzeit hat sich als sehr rechenintensiv und daher nachteilig erwiesen. Daher ist die zu wählende Auflösung der Rasterung der erfassbaren Objekte derart zu wählen, dass die Auswertung schnell genug erfolgen kann. Ein anderer Nachteil besteht darin, dass die Rasterung wie vorgeschlagen durch einen mit der Videokamera synchronisierten Xenon Blitz erfolgt, so dass bestimmte Einsatzgebiete des Verfahrens, wie etwa in Reinräumen, ausgenommen sind.

Das Dokument DE 10196988 T5 offenbart ein mobiles Robotersystem zur Ausführung einer Vielzahl von separaten Tätigkeiten, wie etwa dem Andocken von Betriebsmodulen, das wenigstens einen autonomen mobilen Roboter mit Rädern mit wenigstens einem Radantriebsmotor aufweist; einen eingebauten Computer; Mittel zur Navigation, Ausrichtung und Manövrierung in einer Umgebung mit beweglichen Hindernissen; ein Sensorsystem und ein drahtloses Kommunikationssystem zum Empfangen und Senden von Signalen enthält. Insbesondere umfasst das Robotersystem Mittel zur Überwachung entlang der Seiten des autonomen mobilen Roboters unter Verwendung eines Paars von Kameras oder eines Paars von Infrarotsensoren, wobei damit beabsichtig ist, dem Roboter zu ermöglichen bzw. sie zu aktivieren, Kollisionen mit Wänden und irgendwelchen Gegenständen zu vermeiden, die einer der Seiten des Roboters nahe kommen könnten.

Dokument WO 2008/060 689 zeigt ein Verfahren zum autonomen Steuern eines Fahrzeugs. Dabei können verschiedene Fahrverhalten autonom gesteuert werden, Zur Ausführung des Treppenfahrprogramms ist ein Neigungssensor vorgesehen, der die Neigung des Fahrzeugs bestimmt.

Dokument US 2007/0 156 286 beschreibt ein mobiler Roboter mit einer automatischen Steureing bekannt, der optische Verfahren zur Objekt- und Hindernisererkennung verwendet. Gemäß dem Verfahren, erfolgt der Dokument keine Ermittlung der Steigung einer zu verfahrende Oberfläche anhand von abstandsmesswerten und einer ermittelten Fahrstrecke.

Einer der Nachteile dieser Vorrichtung besteht darin, dass die beiden seitlich angeordneten Infrarotabstandsmesssensoren oder Kameras einen eingeschränkten Sektor erfassen und somit in Fahrtrichtung vorhandene Hindernisse übersehen werden. Zudem ist die Anordnung sperrig und schränkt die Bewegungsfreiheit des Systems ein.

Aus EP-358628 ist ein Navigationssystem für ein fahrerloses Transportfahrzeug bekannt, das ausser den vor dem Fahrzeug befindlichen grösseren Hindernissen auch Niveauunterschiede in der zu befahrenden Oberfläche detektiert und ein Steuersignal zu deren Umfahrung generiert. US-4986384 beschreibt ebenfalls ein Steuerungssystem für ein fahrerloses Transportfahrzeug, welches mittels eines Oberflächendetektors Unregelmässigkeiten der zu befahrenden Oberfläche erfasst und ein entsprechendes Steuersignal generiert.

Alle bekannten Systeme zur Steuerung von fahrerlosen Fahrzeugen dienen dazu, unüberwindliche Hindernissen aller Art, also auch Unregelmässigkeiten der zu befahrenden Oberfläche, die durch Vergleich mit einem Grenzwert als unüberwindlich definiert werden, auszuweichen. Derartige Navigationssysteme, die ein Ausweichsignal von einem direkten Vergleich eines gemessenen Abstandswerts mit einem festgelegten Grenzwert gewinnen, sind nicht in der Lage zwischen unüberwindlichen Hindernissen und befahrbaren Hindernissen, z.B. Rampen, zu unterscheiden.

Es ist daher Aufgabe der vorliegenden Erfindung, eine Vorrichtung und ein Verfahren zum automatisierten Steuern eines selbstfahrenden Transportsystems bereitzustellen, welches die Nachteile des Stands der Technik nicht aufweist, insbesondere eine Unterscheidung von unüberwindlichen und befahrbaren Hindernissen ermöglicht.

Erfindungsgemäss wird diese Aufgabe gelöst durch eine Vorrichtung sowie ein Verfahren zum automatisierten Steuern eines Transportsystems mit den im kennzeichnenden Teil der unabhängigen Ansprüche angegebenen Merkmalen.

Einer der Vorteile der Erfindung besteht darin, dass das erfindungsgemässe Transportsystem in der Lage ist, automatisiert einen Abgrund oder eine nicht befahrbare Oberfläche zu erkennen und von einem befahrbaren Hindernis zu unterscheiden, sowie nur bei unüberwindlichen Hindernissen basierend auf dem Steuersignal anzuhalten oder entsprechende Lenkmanöver zu tätigen. Insbesondere ist vorteilhaft, dass nicht nur bewegliche und unerwartete Objekte in einer Fahrtrichtung erfassbar sind, sondern auch, dass nicht bekannte Vertiefungen oder Erhebungen des Fahruntergrunds rechtzeitig erkannt werden. Diesfalls wird das selbstfahrende Fahrzeug gestoppt oder verlangsamt und ein Ausweichmanöver gefahren, um etwa einen Absturz zu verhindern.

Vorteilhafte Ausgestaltungen des erfindungsgemässen Transportsystems sind den abhängigen Ansprüchen zu entnehmen.

Das Transportsystem umfasst in ihrer Beschleunigung veränderbare sowie lenkbare und/oder steuerbare Räder, welche mittels der Steuervorrichtung automatisiert steuerbar sind und die Messvorrichtung umfasst mehrere Messmodule zum Erfassen von Abstandsmesswerten eines jeweils entsprechenden lokalen Messbereichs, wobei die Messmodule bezüglich den Rädern des Transportsystems derart horizontal beabstandet sind, dass anhand der Abstandsmesswerte von zu den Rädern benachbarten Vertiefungen und/oder Erhöhungen der Oberfläche ein entsprechendes Steuersignal generierbar ist.

Das erfindungsgemässe Transportsystem eignet sich daher für den sicheren automatisierten Transport vor Gefahr- oder Sondergut etwa in Spitälern, Laboratorien, Lagerhäusern und dergleichen, sowie zum Betrieb von Dienstleistungsgeräten, wie Reinigungssystemen etc., wobei das Transportsystem eventuelle Abgründe oder steile Rampen sicher umgeht oder rechtzeitig stoppt.

Die Erfindung soll nachstehend anhand der schematischen Zeichnung näher erläutert werden. Es zeigen:
Fig. 1 ein schematisch dargestelltes erfindungsgemässes Transportsystem mit zwei Antriebs- und zwei nachführbaren Lenkrädern, wobei das Transportsystem auf einer zu befahrenden Oberfläche vor Erreichen eines Abgrunds rechtzeitig angehalten wird;
Fig. 2 ein schematisch dargestelltes erfindungsgemässes Transportsystem mit einer anderen Ausführung, wobei das Transportsystem ebenfalls vor einem Abgrund rechtzeitig angehalten wird;
Fig. 3a zeigt in einer schematischen Darstellung ein erfindungsgemässes Transportsystem auf einer zu befahrenden Oberfläche, wobei diese verschiedene Vertiefungen, Erhebungen und Rampen aufweist;
Fig. 3b zeigt in einem schematischen Diagramm die mittels der Messvorrichtung des erfindungsgemässen Transportsystems in Fig. 3a erfassten Abstandsmesswerte der gesamten zu befahrenden Oberfläche auf einer Horizontalachse;
Fig. 4, 5 und 6 zeigen jeweils eine in gestrichelter Kreislinie bezeichnete Detailansicht aus Fig. 3b, wobei zwischen zulässigen und nicht zulässigen Messwertebereichen unterschieden werden kann, basierend auf welchen entsprechende Steuersignale mittels der Messvorrichtung erzeugbar sind, um das Transportsystem entsprechend der Beschaffenheit der Oberfläche zu steuern, und
Fig. 7 zeigt ein schematisches Blockschaltbild des erfindungsgemässen Transportsystems.

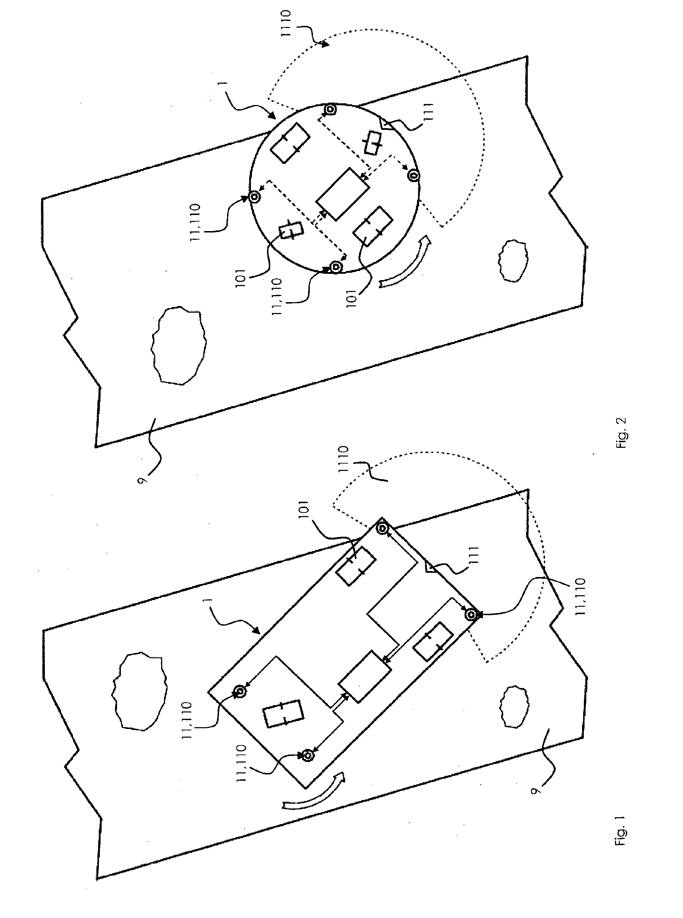

Figur 1 und Figur 2 illustrieren jeweils ein schematisch dargestelltes erfindungsgemässes Transportsystem mit zwei Antriebs- und zwei nachführbaren Lenkrädern, wobei das Transportsystem auf einer zu befahrenden Oberfläche vor Erreichen eines Abgrunds rechtzeitig angehalten wird. Die Lenkräder können auch als Nachlaufrollen ausgebildet sein. Das Transportsystem, hier mit Bezugszeichen 1 bezeichnet, umfasst eine automatisierte Steuervorrichtung sowie eine Messvorrichtung 11 zum Erfassen von Abstandsmesswerten hinsichtlich des Abstands zwischen der Messvorrichtung 11 und einer zu befahrenden Oberfläche 9 und zum Übertragen eines basierend auf den erfassten Abstandsmesswerten generierbaren Steuersignals an die Steuervorrichtung, wobei die Messvorrichtung 11 ausgebildet ist, in einem lokalen Messbereich der Messvorrichtung 11 erfasste Abstandsmesswerte selektiv mit einem Abstandsgrenzwert zu vergleichen und um bei Überschreiten desselben ein entsprechendes Steuersignal zur Steuerung der Transportvorrichtung 1 zu generieren.

Das Transportsystem 1 umfasst in ihrer Beschleunigung veränderbare sowie lenkbare und/oder steuerbare Räder 101, welche mittels der Steuervorrichtung automatisiert steuerbar sind.

Die Messvorrichtung 11 umfasst mehrere Messmodule 110 zum Erfassen von Abstandsmesswerten eines jeweils entsprechenden lokalen Messbereichs, wobei die Messmodule 110 bezüglich der Räder 101 des Transportsystems 1 derart horizontal beabstandet sind, dass anhand der Abstandsmesswerte von zu den Rädern benachbarten Vertiefungen und/oder Erhöhungen der Oberfläche ein entsprechendes Steuersignal generierbar ist. Die Abstandsmesswerte werden durch die erfindungsgemässe Messvorrichtung 11 auch bei teilweise nasser oder bei dunkler Oberfläche zuverlässig erfasst.

Die Messmodule 110 sind vorzugsweise so angeordnet, dass sie zu den Rädern 101 einen Minimalabstand aufweisen, so dass genügend Reaktionszeit bei einer bestimmten Geschwindigkeit des Transportsystems vorhanden ist, um ein Steuersignal basierend auf den erfassten Abstandsmesswerten zu generieren und der Steuervorrichtung zu übertragen. Die Messmodule sind bspw. auf der Unterseite des Transportsystems angeordnet bzw. sind in der Lage, aus einer Öffnung der Unterseite heraus eine Abstandsmessung durchzuführen. Die Messmodule 110 können auch auf einem Sockel des Transportsystems in einem bestimmten Winkel angeordnet sein, so dass der lokale Messbereich vor den Rädern zu liegen kommt.

Die Messvorrichtung 11 weist vorzugsweise auch mindestens ein Distanzmessmodul 111 zum Erfassen von Distanzmesswerten eines zur Oberfläche 9 beabstandeten horizontalen Distanzmessbereichs 1110 auf, basierend auf welchen Distanzmesswerten ein entsprechendes Steuersignal generierbar ist. So können auch Sicherheitsstopps des Transportsystems durchgeführt werden, selbst, wenn kein Abgrund erfasst worden ist.

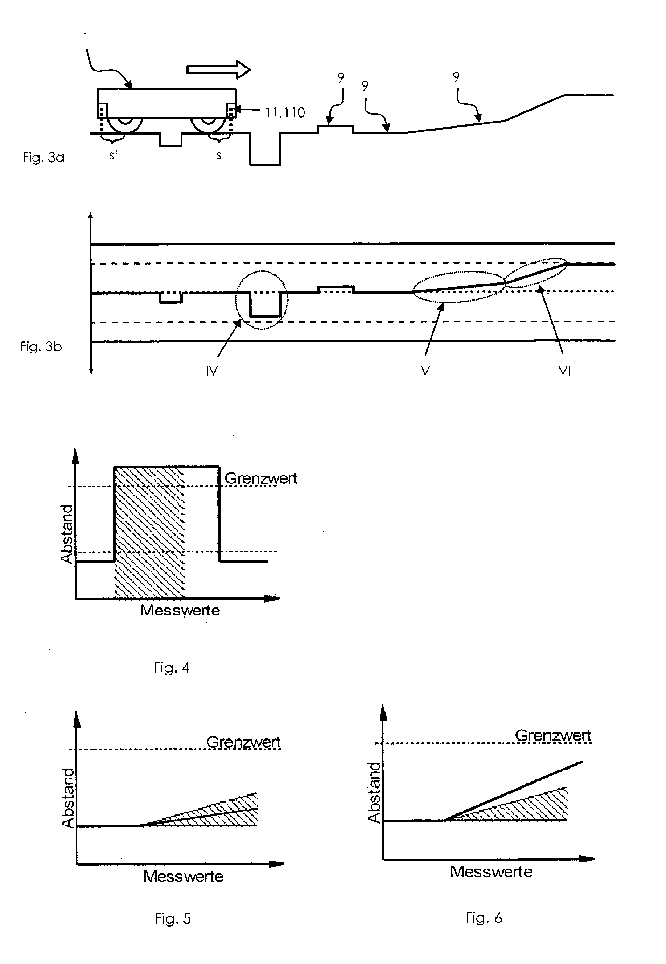

Figur 3a illustriert in einer schematischen Darstellung ein erfindungsgemässes Transportsystem 1 auf einer zu befahrenden Oberfläche 9, wobei diese verschiedene Vertiefungen, Erhebungen und Rampen aufweist;

Figur 3b illustriert in einem schematischen Diagramm die mittels der Messvorrichtung 11 des erfindungsgemässen Transportsystems 1 in Fig. 3a erfassten Abstandsmesswerte der gesamten zu befahrenden Oberfläche 9 auf einer Horizontalachse;

Figuren 4, 5 und 6 zeigen jeweils eine in gestrichelter Kreislinie bezeichnete Detailansicht aus Figur 3b, wobei zwischen zulässigen und nicht zulässigen Messwertebereichen unterschieden werden kann, basierend auf welchen entsprechende Steuersignale mittels der Messvorrichtung 11 erzeugbar sind, um das Transportsystem 1 entsprechend der Beschaffenheit der Oberfläche 9 zu steuern.

Figur 4 illustriert eine Vielzahl zeitlich nacheinander erfasster Abstandsmesswerte, welche ausserhalb eines konstanten Abstandsgrenzwerts liegen. Da die Messmodule horizontal zu den Rädern beabstandet sind, kann ein solcher Abgrund erkannt und rechtzeitig ein entsprechendes Steuersignal generiert und das Transportsystem 1 angehalten werden, um einen Absturz zu verhindern. Dabei ist der lokale Messbereich der zu messenden Oberfläche 9 durch eine Strecke oder Abstand zwischen einem Lenk- oder Antriebsrad des Transportsystems 1 und dem zum entsprechenden Rad am weitesten beabstandete Messpunkt des Messbereichs derart gewählt, dass die zum Generieren des Steuersignals und Steuern des Transportsystems 1 erforderliche Zeit geringer ist als der Quotient der besagten Strecke und der Fahrgeschwindigkeit des Transportsystems 1. Optische Abstandssensoren, wie etwa Laserabstandssensoren, weisen einen im Wesentlichen punktuellen, also kleinflächigen Messbereich auf.

Figur 5 zeigt einen Abschnitt der zu befahrenden Oberfläche 9, wobei mittels der erfassten Abstandsmesswerte eine zu befahrende Rampe erkannt wird. Dies wird mittels eines Gewichtungsmoduls der Messvorrichtung 11 erreicht, wobei ein zulässiger Abstandsgrenzwertbereich bzw. Referenzwert aus einer Lookup-Table ausgelesen wird und wobei ein neu erfasster Abstandsmesswert nur zum Generieren des Steuersignals herangezogen wird, falls er ausserhalb des Abstandsgrenzwertbereichs liegt, um ein Befahren der Rampen zu ermöglichen.

Figur 6 zeigt einen Abschnitt der zu befahrenden Oberfläche 9, bei welcher die ersichtliche Rampe zu steil ist, um vom Transportsystem 1 befahren zu werden. Es wird hier also ein zulässiger Steigungsbereich mit schraffierter Fläche illustriert, wobei die effektiv erfassten Abstandsmesswerte ausserhalb dieses zulässigen Bereichs liegen. Würde das erfindungsgemässe Transportsystem 1 diese Steigung befahren wollen, so würden Abstandsgrenzwerte überschritten und ein entsprechendes Steuersignal, bspw. Stoppsignal, generiert und das Transportsystem angehalten.

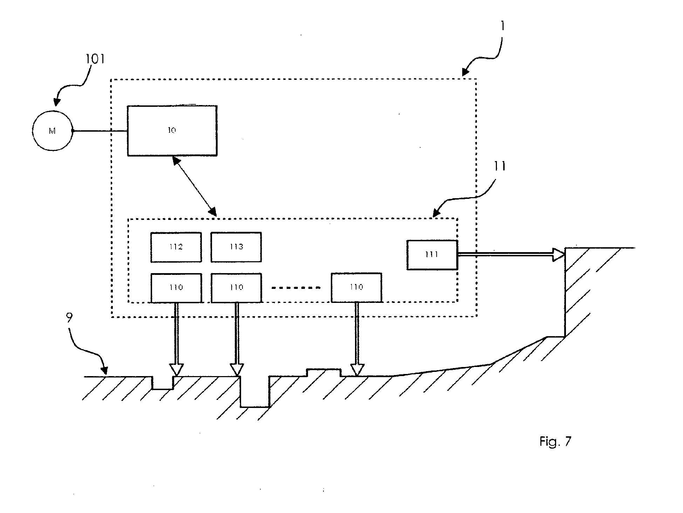

Figur 7 illustriert ein schematisches Blockschaltbild des erfindungsgemässen Transportsystems 1, wobei mittels mehreren Messmodulen 110 der Messvorrichtung 11 des Transportsystems jeweils entsprechende Abstandsmesswerte bezüglich der Oberfläche 9 erfasst werden. Basierend auf den erfassten Abstandsmesswerten wird der Antrieb, bspw. ein Elektromotor M eines Rads, gesteuert. Die Messvorrichtung 11 umfasst ein Fahrwegmessmodul 112 zum Erfassen einer zurückgelegten Fahrstrecke s, wobei die Messvorrichtung zudem eingerichtet ist, basierend auf dem Quotienten der Differenz aufeinanderfolgender Abstandsmesswerte und der erfassten Fahrstrecke ein entsprechendes Steuersignal zu generieren, derart, dass zulässige ansteigende und/oder abfallende Rampen detektierbar sind. Es erfolgt also eine dynamische Erfassung der Abstandsmesswerte in Kombination mit der zurückgelegten Fahrstrecke. Anders ausgedrückt ist es möglich, den dynamischen Verlauf des Abstands zwischen Abstandssensor und befahrener Oberfläche und damit die Neigung der befahrenen Fläche zu bestimmen. Falls die detektierte ansteigende und/oder abfallende Rampe nach Vergleich mit einem Referenzwert unzulässig ist, wird mittels der Steuervorrichtung ein entsprechendes Steuersignal, bspw. Stoppsignal erzeugt. Mit Bezugszeichen 113 ist ein Gewichtungsmodul der oben beschriebenen Art bezeichnet.

Das Fahrwegmessmodul ist beim vorliegenden Ausführungsbeispiel ein Drehgeber, vorzugsweise ein Encoder, welcher die Winkelbewegung des Antriebsrads erfasst, aus welcher mit Bezug zum Raddurchmesser der zurückgelegte Weg bestimmt wird. Aus diesem Wegmesswert und dem Abstandsmesswert wird kontinuierlich die Steigung berechnet. Durch Vergleich mit einem Grenzwert für die Steigung wird eine Steigung bzw. ein Gefälle als befahrbar oder unüberwindlich definiert.

Sprunghafte Änderungen der befahrenen Oberfläche, wie z.B. ein Abgrund, werden von diesem System als Flächen erkannt, deren Steilheit zu gross ist um befahrbar zu sein, und führen deshalb zu einem Ausweichmanöverr oder zum Anhalten des Transport fahrzeugs.

### Bezugszeichenlegende

- 1: Transportsystem
- 10: Steuervorrichtung
- 101: Rad
- 11: Messvorrichtung
- 110: Messmodul
- 111: Distanzmessmodul
- 1110: horizontaler Distanzmessbereich
- 112: Fahrwegmessmodul
- 113: Gewichtungsmodul
- 9: Oberfläche
- s: Fahrstrecke

## Patentansprüche

1. Verfahren zum automatisierten Steuern eines fahrerlosen Transportsystems, bei welchem kontinuierlich der Abstand zwischen einer am Transportsystem befindlichen Messvorrichtung und einer zu befahrenden Oberfläche erfasst wird und die erfassten Abstandsmesswerte zur Generierung eines Steuersignals zum Steuern des Transportsystems verwendet werden, **dadurch gekennzeichnet, dass** zusätzlich zu den Abstandsmesswerten kontinuierlich die Fahrstrecke des Transportsystems erfasst und aus dem Abstandsmesswert und der Fahrstrecke die Steigung der zu befahrenden Oberfläche berechnet wird und ein aus der berechneten Steigung abgeleitetes Signal an eine Steuereinrichtung zur Steuerung des Transportsystems übertragen wird, wobei innerhalb eines zulässigen Steigungsbereichs ein Befahren der Oberfläche möglich ist.

2. Verfahren nach Anspruch 1, **dadurch gekennzeichnet, dass** die berechnete Steigung mit einem festgelegten Grenzwert verglichen wird, unterhalb dessen eine Steigung befahrbar ist.

3. Verfahren nach Anspruch 2, **dadurch gekennzeichnet, dass** bei einer berechneten Steigung über dem Grenzwert ein Umlenkungs- oder Stoppsignal an die Steuereinrichtung übertragen wird.

4. Automatisch gesteuertes, fahrerloses Transportsystem mit einer Messvorrichtung (11) zum Erfassen des Abstands zwischen der Messvorrichtung und einer zu befahrenden Oberfläche und zur Generierung eines Steuersignals zum Steuern des Transportsystems, **gekennzeichnet durch** eine Fahrwegsmesseinrichtung (112) zum Erfassen einer zurückgelegten Fahrstrecke, eine Recheneinheit zur Berechnung der Steigung der Oberfläche aus den Abstandsmesswerten und der Fahrstrecke und eine Steuereinheit zur Steuerung der Transportsystems mittels eines von der Recheneinheit generierten Steuersignals.

5. Transportsystem nach Anspruch 4, **dadurch gekennzeichnet, dass** die Recheneinheit eine Vergleichseinheit zum Vergleich der berechneten Steigung mit einem festgelegten Grenzwert umfasst, unterhalb dessen eine Steigung für das Transportsystem befahrbar ist.

## Claims

1. Method for the automated control of a driverless transport system, in which the distance between a measuring device situated on the transport system and a surface to be traveled on is continuously detected, and the detected measured distance values are used for generating a control signal for controlling the transport system, **characterized in that** in addition to the measured distance values the travel route of the transport system is continuously detected, and the inclination of the surface to be traveled on is computed from the measured distance value and the travel route, and a signal which is derived from the computed inclination is transmitted to a control device for controlling the transport system, it being possible to travel on the surface within an allowable inclination range.

2. Method according to Claim 1, **characterized in that** the computed inclination is compared to a fixed limit value below which an inclination may be traveled on.

3. Method according to Claim 2, **characterized in that** in the event of a computed inclination that is above the limit value, a rerouting or stop signal is transmitted to the control device.

4. Automatically controlled, driverless transport system having a measuring device (11) for detecting the distance between the measuring device and a surface to be traveled on and for generating a control signal for controlling the transport system, **characterized by** a travel path measuring device (112) for detecting a travel route covered, a computing unit for computing the inclination of the surface from the measured distance values and the travel route, and a control unit for controlling the transport system by means of a control signal that is generated by the computing unit.

5. Transport system according to Claim 4, **characterized in that** the computing unit includes a comparator for comparing the computed inclination to a fixed limit value below which an inclination may be traveled on by the transport system.

## Revendications

1. Procédé de commande automatisée d'un système de transport sans conducteur, suivant lequel la distance entre un dispositif de mesure situé sur le système de transport et une surface à parcourir est continuellement captée et les mesures de distance captées sont utilisées pour générer un signal de commande destiné à commander le système de transport, **caractérisé en ce qu'**en plus des mesures de distance, le trajet du système de transport est continuellement capté, la déclivité ascendante de la surface à parcourir est calculée sur la base de la mesure de distance et du trajet et un signal dérivé de la déclivité ascendante calculée est transmis à un dispositif de commande destiné à commander le système de transport, un parcours de la surface étant possible dans les limites d'une plage de déclivité ascendante admissible.

2. Procédé selon la revendication 1, **caractérisé en ce que** la déclivité ascendante calculée est comparée à une valeur limite définie au-dessous de laquelle une déclivité ascendante peut être parcourue.

3. Procédé selon la revendication 2, **caractérisé en ce que**, dans le cas d'une déclivité ascendante calculée supérieure à la valeur limite, un signal de changement de direction ou d'arrêt est transmis au dispositif de commande.

4. Système de transport sans conducteur, commandé automatiquement, comportant un dispositif de mesure (11) destiné à capter la distance entre le dispositif de mesure et une surface à parcourir et à générer un signal de commande destiné à commander le système de transport, **caractérisé par** un dispositif de mesure du trajet (112) destiné à capter un trajet parcouru, une unité de calcul destinée à calculer la déclivité ascendante de la surface sur la base de mesures de distance et du trajet, et une unité de commande destinée à commander le système de transport au moyen d'un signal de commande généré par l'unité de calcul.

5. Système de transport selon la revendication 4, **caractérisé en ce que** l'unité de calcul comprend une unité de comparaison destinée à comparer la déclivité ascendante calculée à une valeur limite définie au-dessous de laquelle une déclivité ascendante peut être parcourue par le système de transport.
